(19)

**Europäisches Patentamt**
**European Patent Office**
**Office européen des brevets**

(11) **EP 1 629 642 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(21) Anmeldenummer: **04741686.2**

(22) Anmeldetag: **01.06.2004**

(51) Int Cl.:
*H04L 12/56* *(2006.01)*        *H04L 29/06* *(2006.01)*

(86) Internationale Anmeldenummer:
**PCT/EP2004/050971**

(87) Internationale Veröffentlichungsnummer:
**WO 2004/107677 (09.12.2004 Gazette 2004/50)**

(54) **Verfahren für eine Verkehrsverteilung mittels Hash-Codes entsprechend einer Soll-Verkehrsverteilung in einem paketorientierten Netz mit Mehrwege-Routing**

Method for distributing traffic using hash-codes corresponding to a desired traffic distribution in a packet-oriented network comprising multipath routing

Procédé de repartition du trafic au moyen de codes de hachage correspondant à une repartition du trafic théorique dans un réseau à commutation par paquets avec acheminement multivoie

(84) Benannte Vertragsstaaten:
**DE ES FR GB**

(30) Priorität: **03.06.2003 DE 10325016**

(43) Veröffentlichungstag der Anmeldung:
**01.03.2006 Patentblatt 2006/09**

(73) Patentinhaber: **NOKIA SIEMENS NETWORKS GMBH & CO. KG**
**81541 München (DE)**

(72) Erfinder:
• **SCHOLLMEIER, Gero**
**82131 Gauting (DE)**
• **WINKLER, Christian**
**80796 München (DE)**

(56) Entgegenhaltungen:
**EP-A- 1 300 992**        **DE-A- 10 325 017**

• **CAO Z ET AL: "PERFORMANCE OF HASHING-BASED SCHEMES FOR INTERNET LOAD BALANCING" PROCEEDINGS IEEE INFOCOM 2000. THE CONFERENCE ON COMPUTER COMMUNICATIONS. 19TH. ANNUAL JOINT CONFERENCE OF THE IEEE COMPUTER ANDCOMMUNICATIONS SOCIETIES. TEL AVIV, ISRAEL, MARCH, 26-30, 2000, PROCEEDINGS IEEE INFOCOM. THE CONFERENCE ON COMPUTER COMMU, Bd. VOL. 3 OF 3. CONF. 19, 26. März 2000 (2000-03-26), Seiten 332-341, XP001004263 ISBN: 0-7803-5881-3 in der Anmeldung erwähnt**
• **SCHNEIDER G M ET AL: "A simulation study of the OSPF-OMP routing algorithm" COMPUTER NETWORKS, ELSEVIER SCIENCE PUBLISHERS B.V., AMSTERDAM, NL, Bd. 39, Nr. 4, 15. Juli 2002 (2002-07-15), Seiten 457-468, XP004359016 ISSN: 1389-1286**
• **VILLAMIZAR CURTIS: "OSPF Optimized Multipath" INTERNET DRAFT, 24. Februar 1999 (1999-02-24), XP002195148**

**Beschreibung**

Die Erfindung betrifft ein Verfahren zur Festlegung der Verkehrsaufteilung bei Knoten in einem mit Knoten und Links gebildeten paketorientierten Netz mit Mehrwegerouting.

Die Entwicklung von Methoden für die Übertragung von Echtzeit-Verkehr, wie z.B. Sprachverkehr, über paketorientierte Netze ist ein zentrales Betätigungsfeld von Netzwerkspezialisten, Vermittlungstechnikern und Internet-Experten.

Derzeit koexistieren leitungsvermittelte Sprachnetze und paketbasierte Datennetze. Aus wirtschaftlichen Erwägungen ist es erstrebenswert, Sprache und Daten über ein einheitliches Netz zu übertragen. Für den gebräuchlichsten Typ der paketorientierten Netze, die auf dem Internet Protokoll basieren und daher auch IP Netze genannt werden, wurden verschiedene Protokolle bzw. Verfahren entwickelt, die eine Sprachübertragung über IP Netze mit der aus herkömmlichen Netzen gewohnten Sprachqualität erlauben sollen. Dabei sind mehrere Unzulänglichkeiten der ursprünglichen IP Netze bezüglich der Übertragung von Echtzeit-Verkehr (z.B. Sprache) zu überwinden.

Herkömmliche IP Netze befördern Datenpakete entsprechend eines "best-effort" Ansatzes. Es findet eine Weitervermittlung von Datenpaketen durch Knoten bzw. Router anhand der im Paketkopf enthaltenen Zieladressen statt. Routing-Entscheidungen sind lokal. Die einzelnen Knoten funktionieren autonom. Die Qualität der Übertragung von Paketen hängt kritisch von den Bedingungen bei den im Rahmen der Übertragung passierten Knoten ab. So kann es bei überlasteten Knoten zu deutlichen Verzögerungen und sogar zum Verwurf von Paketen kommen, wodurch die Qualitätsmerkmale einer Sprachübertragung nicht gewährleistet werden können.

Eine Möglichkeit, die Anfälligkeit gegenüber Engstellen oder Bottlenecks im Übertragungspfad zu verringern und die Verteilung des Verkehrs zu verbessern, ist die Übertragung des Verkehrs über mehr als einen Weg. Bei dem ECMP (Equal Cost Multipath) Konzept, welches im Rahmen des OSPF (Open Shortest Path First) Standard definiert ist, ist vorgesehen, Verkehr über mehrere im Sinne einer Metrik gleich lange bzw. mit gleichen Kosten (häufig wird ein sogenanntes least cost routing durchgeführt) behaftete Wege zu übertragen.

Für die Verteilung entlang dieser Wege wird üblicherweise eine der folgenden zwei Strategien eingesetzt:

1. Verteilung per Paket: Die Pakete werden einzeln auf die Ausgänge verteilt (z.B. mit einer sogenannten gewichteten Round-Robin-Strategie). Dabei entsteht zwar eine optimale und deterministische Verkehrsaufteilung. Jedoch kommt es zu Vertauschungen in der Reihenfolge der Pakete einer Kommunikationsbeziehung, da die Pakete dann verschiedene Wege durchlaufen, bevor sie am Ziel eintreffen.

2. Verteilung per Flow: Die Aufteilung erfolgt an Hand der Verkehrsflüsse (Flows), so dass die Pakete einer Kommunikationsbeziehung alle den selben Ausgang nehmen. Hier ist zwar die Granularität bzw. Feinheit der Verkehrsaufteilung schlechter, und die Freiheit bei der Wahl eines Weges bei der Zuordnung eines Paketes zu einem Weg durch die Flow-Zugehörigkeit eingeschränkt. Dafür stellt diese Strategie die Paketreihenfolge innerhalb jeder Kommunikationsbeziehung sicher.

Der Begriff des Flows wird dabei häufig dadurch definiert, dass man Pakete, für die eine Ursprungsadressinformation und eine Zieladressinformation (z.B. IP Adressen oder IP Adressen zusammen mit Port-Nummern) übereinstimmen, demselben Flow zuordnet.

Für eine praktikable und skalierbare Realisierung der zweiten Variante, d.h. Aufteilung nach Flows, werden üblicherweise Hash-Codes eingesetzt. Ein Hash-Code ist dabei eine durch eine Hash-Funktion erzeugte Zahl im Wertebereich der Hash-Funktion. Eine Hash-Funktion bildet einen String oder eine Ziffernfolge auf einen festen Wertebereich bzw. auf eine Bitfolge mit fester Länge ab. Hash-Funktionen werden häufig auch für krytographische Verfahren eingesetzt. Bei der Aufteilung auf verschiedene Wege wird aus dem Header bzw. Kopf der IP Pakete (z.B. der Quell- und/oder Zieladresse) ein Hash-Code generiert. Dieser Hash-Code entscheidet dann über die Verkehrsaufteilung. Bei Verwendung von Quell- und Zieladresse als Eingabewert für die Hash-Code-Berechnung erhalten automatisch alle Pakete einer Quell-Ziel-Kommunikationsbeziehung bzw. eines Flows den selben Hash-Code und werden damit auf den selben Ausgang geleitet. Es sind Verfahren bekannt, die dafür sorgen, dass diese Hash-Codes über den erlaubten Bereich der Hash-Codes gleichverteilt sind. Derartige Verfahren sind beispielsweise in der Publikation "Performance of hashing-based schemes for Internet load-balancing" von Z.Cao, Z.Wang und E. Zegura, die in den Proceedings der IEEE Conference on Computer Communications (IEEE Infocom 2000), New Y-ork, im März 2000 veröffentlicht wurde, beschrieben.

Neuere Konzepte gehen dahin, eine flexiblere Verkehrsaufteilung als bei dem ECMP Konzept vorzunehmen. Zwei wesentliche Aspekte dieser flexibleren Aufteilung sind:

● Im Gegensatz zu ECMP, wo zwischen zwei Punkten eine feste Aufteilung auf sich nicht verzweigende Wege vorgesehen ist, soll ein Routing entlang von sich verzweigenden Mehr wegerouten oder Mehrwegpfaden zugelassen werden. Dabei kann im Idealfall von den Knoten autonom die Aufteilung vorgenommen werden, d.h. die lokale Aufteilung von Flows auf Links ist global nicht determiniert.

● Eine erhöhte Autonomie der einzelnen Knoten bei den Routingentscheidungen ist auch im Hinblick auf eine schnelle /k Fehlerreaktion (z.B. Linkausfall) wichtig. Im Gegensatz zu dem ECMP Verfahren, bei dem als Fehlerreaktion eine Neufestlegung der gesamten Pfade erfolgen müsste, soll eine lokale Änderung von Mehrwegerouten möglich sein.

Bei derartigen Erweiterungen hin zu einem flexiblen Mehrwegerouting tritt bei der Anwendung von Hash-Codes für die Aufteilung des Verkehrs eine der Methode inhärente Schwierigkeit auf. Ein grundlegendes Problem der beschriebenen Hash-Methode ist, dass die Pakete von Knoten nach Hash-Codes auf die Ausgänge der von dem Knoten wegführenden Links (im Folgenden werden die einer Mehrwegeroute zugehörigen Links eines Knoten auch als Wegefächer bezeichnet) gegeben und damit also nach Hash-Codes sortiert werden. Wenn in dem an einem Ausgang angeschlossenen Folgeknoten nochmals die selbe Funktion zur Bildung von Häsh-Codes auf die Pakete angewendet wird, so kann das Ergebnis nicht mehr gleichverteilt sein. Vielmehr produziert die Funktion nur noch den durch die Sortierung im Vorgängerknoten bereits vorweggenommenen Wertebereich der Hash-Codes. Damit ist eine sinnvolle Verkehrsverteilung nicht mehr gewährleistet.

Im allgemeinsten Fall sind in einem IP Netz mit Multipath-Routing bzw. Mehrwegerouting die einzelnen Pfade eines muitipath-Fächers nicht notwendigerweise Ende-zu-Ende disjunkt geführt. Es kommt also vor, dass in Netzknoten Verkehr zusammenläuft, der bereits vorher auf Basis von Hash-Codes aufge teilt und damit sortiert wurde (es werden also nicht nur Pakete nach ihren Hash-Codes bei der Aufteilung in den Knoten sortiert sondern solche sortierten Paketströme auch zusammengeführt). Das führt in aller Regel zu groben Abweichungen von der Gleichverteilung in diesem Knoten, sodass eine gewünschte Aufteilung des Verkehrs auf abgehende Links eines Multipath-Wegefächers so nicht mehr gewährleistet ist.

Die Erfindung hat zur Aufgabe, ein Verfahren anzugeben, welches eine Verkehrsverteilung mittels Hash-Codes für beliebige Mehrweegroutingverfahren ermöglicht.

Die Aufgabe wird durch Anspruch 1 gelöst.

Erfindungsgemäß wird ausgehend von einem oder mehreren Startknoten (z.B. Randknoten des Netzes) eine Mehrwegeroute sukzessive durchlaufen und abhängig von einer gewünschten Verkehrsverteilung (d.h. eine Verteilung des Verkehrs im Netz) bzw. Verkehrsaufteilung (d.h. eine Aufteilung des Verkehrs bei den Knoten) knotenbezogene Wertebereiche der Hash-Codes bestimmt, die eine Verkehrsaufteilung entsprechend der Soll-Verkehrsverteilung gewährleisten. Ein Startknoten ist dabei dadurch gekennzeichnet, dass die Verkehrsmengenaufteilung in Abhängigkeit der Hash-Codes, welche im Zuge des Transports von Flows zugehörigen Paketen über die Mehrwegeroute bestimmten werden, bekannt ist. Anhand der bekannten Verkehrsmengenaufteilung durch den bzw. die Startknoten ist für die Folgeknoten die Verkehrsmengenverteilung bzw.

Verkehrsvolumenverteilung in Abhängigkeit der Hash-Codes ermittelbar und es können Wertebereiche für die Aufteilung des Verkehrs im Sinne der Soll-Verkehrsverteilung festgelegt werden. Auf diese Weise lassen sich Knoten für Knoten entlang der Mehrwegeroute Wertebereiche der Hash-Codes und eine Zuordnung dieser Wertebereiche zu Links für die Verkehrsaufteilung festlegen, die der Soll-Verteilung des Verkehrs entspricht. Die Gesamtmenge bzw. das Gesamtvolumen des auf einen Link geleiteten Verkehrs ergibt sich dabei durch Integration der Verkehrsmenge der Hash-Code Wertebereiche, welche dem Link zugeordnet sind. Die Soll-Verteilung kann z.B. durch Verkehrsmodelle bzw. eine Verkehrsmatrix bestimmt werden.

Mit dem erfinderischen Verfahren lässt sich eine (deterministische) Verkehrsaufteilung nach Maßgabe einer Soll-Verkehrsverteilung im Netz für beliebige Mehrwegerouten mit Verkehrsaufteilung an Hand von Hash-Codes festlegen. Dabei kann z.B. jedem abgehenden Link ein Wertebereich zugeordnet werden. Eine mögliche Verzerrung durch Verwendung der selben Hash-Funktion für aufeinanderfolgende Knoten wird durch die Festlegung von Hash-Code Wertebereichen im Sinne der Soll-Verkehrsverteilung vermieden. In der Regel folgen beim erfindungsgemäßen Verfahren die Pakete desselben Flows demselben Pfad, so dass zusätzlicher Aufwand für eine erneute Sortierung von Paketen (im Englischen spricht man von resequencing) vermieden wird.

Für die Berechnung von Wertebereichen der Hash-Codes ist es günstig, wenn in dem Startknoten oder den Startknoten die Verkehrsmengendichte als Funktion der Hash-Codes gleichverteilt ist. Die Berechnung von Hash-Codes erfolgt beispielsweise anhand von Adressinformationen, z.B. einer Ursprungs- und Zieladresse oder 2-Tupeln aus Unsprungsadresse und Portnummer sowie Zieladresse und Portnummer, welche den Flow kennzeichnen.

Im Folgenden wird der Erfindungsgegenstand im Rahmen eines Ausführungsbeispiels anhand von Figuren näher erläutert. Es zeigen:

Fig. 1: einen Netzausschnitt mit Knoten und Links

Fig. 2: eine Verkehrsverteilung über Hash-Codes an Knoten A und eine Verkehrsverteilung an Knoten B

Fig. 3: den aggregierte Verkehr in Knoten C

Fig. 4: den über die Hash-Codes integrierten Verkehr

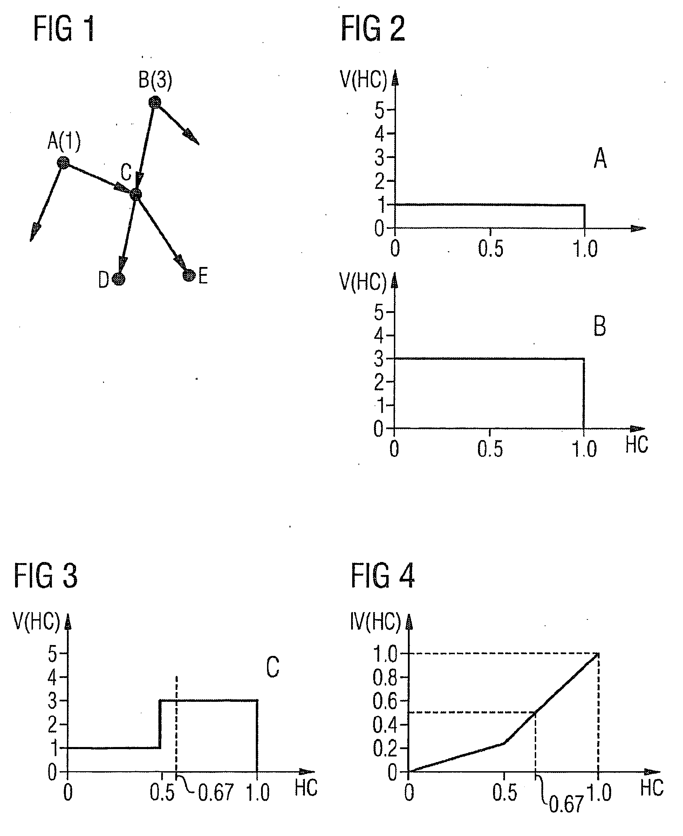

Figuren 1-4 illustrieren die Schwierigkeiten im herkömmlichen Fall und zeigen, wie erfindungsgemäß dieses Problem gelöst wird.

Figur 1 zeigt einen Netzausschnitt mit den Knoten A, B, C, D und E und einigen, durch Pfeile dargestellten Links. Die Zahlen hinter der Knotenbezeichnung A und B geben das relative Verkehrsvolumen an, den diese Knoten in das Netz liefern, d.h. über Knoten B läuft dreimal so viel Verkehr wie über Knoten A. Figur 2 zeigt den gleichverteilten Verkehr an Knoten A (oben) und Knoten B (unten). Die Abszisse bezeichnet die Hash-Codes HC, die in einer normierten Darstellung im Bereich 0..1 liegen sollen. Die Ordinate gibt die Verkehrsdichte V(HC) an, die Kurve beschreibt also die (normierte) Verteilung des Verkehrs über den Hash-Codes HC. Das Integral, also die Fläche unter der rechteckigen Kurve, entspricht dem Verkehrsvolumen des jeweiligen Knotens. Figur 3 zeigt den sich im Knoten C ergebenden Verkehr, wenn in A und B der Verkehr jeweils zur Hälfte auf die zwei eingezeichneten Links wie folgt verteilt wird: Von A nach C wird jeweils der Verkehr mit Hash-Codes <=0.5 geschickt und von B nach C der Verkehr mit Hash-Codes HC 0.5 < Hash-Code <= 1. Es ist offensichtlich, dass die Hash-Codes HC des Verkehrs im Knoten C damit nicht mehr gleich verteilt sind. Die gewünschte Aufteilung des Verkehrs von C nach D und E ist nicht mehr gewährleistet, wenn bei der Aufteilung des Verkehrs durch Knoten C von einer Gleichverteilung ausgegangen wird.

Erfindungsgemäß wird ausgehend von den Knoten A und B der Multipath-Route:

A) in einem ersten Schritt die entstehende Verteilung des Verkehrsvolumens über die Hash-Codes HC in dem Folgeknoten C aus dem Verkehrsaufkommen und den vorgegebenen Soll-Verteilgewichten berechnet wird.

B) in einem zweiten Schritt durch (stückweise) Integration dieser Verteilung ermittelt wird, wo die Hash-Code Grenzen in dem betrachteten Knoten zu setzen sind, um das gewünschte Soll-Verteilgewicht zu erreichen. Ist w das gewünschte Verteil-Gewicht und IV(HC) die auf 1 normierte kumulative bzw. integrierte Verteilung des Verkehrsvolumens V(HC) über die Hash-Codes HC, so ist

$$w = V(HC1) - V(HC2)$$

wobei HC1 .. HC2 der Bereich der Hash-Codes ist, die zu dem Ausgang geleitet werden, der das Gewicht w erhalten soll. Werden nur zwei Ausgänge verwendet, so ist für den unteren Anteil immer HC1 gleich dem minimalen vorkommenden Hash-Code HC_min und für den oberen Anteil immer HC2 gleich dem maximalen vorkommenden Hash-Code HC_max. Soll der Verkehr auf mehr als zwei Links verteilt werden, so sind die Werte von HC1 bzw. HC2 für die Links sukzessiv zu berechnen, beginnend bei HC_min oder HC_max.

Figur 3 zeigt die entstehende kumulativen Verteilung des Verkehrsvolumens über die Hash-Codes in Knoten C. Eingezeichnet ist zudem die Grenze $HC_D=0{,}67$ (bezogen auf die auf 1 normierten Hash-Codes HC), die in C eingestellt werden muss, um eine halbe-halbe-Verteilung auf die Links zu D ($w_D$=0,5) und E

($w_E$=0,5) zu erreichen. Zum Vergleich: In Knoten A und B war für eine halbe-halbe-Verteilung $HC_D$ =0,5 einzustellen. Figur 4 zeigt den integrierten Verkehr IV(HC) in Knoten C, wobei der gesamte Verkehr auf 1 normiert ist. Aus der Figur ergibt sich, dass die Grenzen der Hash-Code-Wertebereiche zu HC_min = 0 und HC_max = 0.67 bzw. bei HC_min = 0.67 und HC_max = 1 festzusetzen sind, um eine Gleichverteilung des über den Knoten C geleiteten Verkehrs auf die beiden nachfolgenden Knoten D und E einzustellen.

Die für den Knoten C beschriebenen Schritte eins und zwei können sukzessiv für alle Knoten entlang der Multipath-Route durchgeführt werden, bis der Zielknoten erreicht ist (das Verfahren "durchwandert" also die Multipath-Route).

Ergebnis sind für jeden Knoten in der Multipath-Route die an seinen Kanten für die gewünschten Soll-Verkehrs-Verteilgewichte einzustellenden Hash-Code-Grenzen.

**Patentansprüche**

1. Verfahren zur Festlegung der Verkehrsaufteilung bei Knoten (C) in einem mit Knoten (A,B,C,D,E) und Links gebildeten paketorientierten Netz mit Mehrwegerouting, wobei bei Knoten (A,B,C) des Netzes Pakete auf wenigstens zwei abgehende Links nach Maßgabe eines mittels einer durch die Pakete umfassten Adressinformation gebildeten Hash-Codes (HC) verteilt werden, demzufolge

- für entlang einer Mehrwegeroute zu leitenden Verkehr eine Soll-Aufteilung des Verkehrs entlang dieser Route festgelegt wird,
- ausgehend von einem oder mehreren Startknoten der Mehrwegeroute entlang der Mehrwegeroute für wenigstens einen Knoten (A,B,C) mit wenigstens zwei zu der Mehrwegeroute gehörenden abgehenden Links,

-- die Verteilung (V(HC)) des auf der Mehrwegeroute zu dem Knoten geleiteten Verkehrs in Abhängigkeit vom Wertebereich der Hash-Codes (HC) auf der Grundlage des von vorhergehenden Knoten (A,B) zu dem jeweiligen Knoten geleiteten Verkehrs ermittelt wird,
-- eine Zuordnung von Wertebereichabschnitten der Hash-Codes (HC) zu ausgehenden Links der Mehrwegeroute nach Maßgabe der Soll-Aufteilung des Verkehrs festgelegt wird.

2. Verfahren nach Anspruch 1, **dadurch gekennzeichnet, dass**

- bei einem Startknoten (A,B) die Hash-Codes (HC) in ihrem Wertebereich gleichverteilt sind.

**3.** Verfahren nach Anspruch 1 oder 2,
**dadurch gekennzeichnet, dass**

- die Hash-Codes aus einer Ursprungsadresse und einer Zieladresse gebildet werden.

**4.** Verfahren nach einem der vorhergehenden Ansprüche,
**dadurch gekennzeichnet, dass**

- jedem ausgehenden Link genau ein Wertebereichsabschnitt zugeordnet wird.

**Claims**

**1.** Method for specifying the traffic allocation in node (C) in a packet-oriented network formed with nodes (A, B, C, D, E) and links and employing multipath routing,
with packets being distributed in nodes (A, B, C) of the network to at least two outgoing links in accordance with a hash code (HC) formed by means of address information contained by the packets, further to which

- for traffic to be routed along a multipath route a target allocation is specified for the traffic along said route,
- starting from one or more start nodes of the multipath route along the multipath path for at least one node (A, B, C) with at least two outgoing links belonging to the multipath route,

-- distribution (V(HC)) of the traffic routed to the node on the multipath route is determined as a function of the value range of the hash codes (HC) on the basis of the traffic routed from preceding nodes (A, B) to the respective node,
-- an assignment of value range sections of the hash codes (HC) to outgoing links of the multipath route is specified in accordance with the target distribution of traffic.

**2.** Method according to claim 1,
**characterised in that**

- in a start node (A, B) the hash codes (HC) are evenly distributed in their value range.

**3.** Method according to claim 1 or 2,
**characterised in that**

- the hash codes are formed from a source address and a destination address.

**4.** Method according to one of the preceding claims,
**characterised in that**

- just one value range section is assigned to each outgoing link.

**Revendications**

**1.** Procédé pour fixer la répartition de trafic dans le cas de noeuds (C) dans un réseau orienté paquets formé de noeuds (A, B, C, D, E) et de liens avec un routage multivoie, sachant que, dans le cas de noeuds (A, B, C) du réseau, les paquets sont répartis entre au moins deux liens sortant en fonction d'un code de hachage (HC) formé au moyen d'une information d'adresse inclue par les paquets, en conséquence,

- une répartition théorique du trafic le long de cette route est définie pour le trafic à diriger le long d'une route multivoie,
- à partir d'un ou de plusieurs noeuds de départ de la route multivoie le long de la route multivoie pour au moins un noeud (A, B, C) avec au moins deux liens partant et appartenant à la route multivoie,

-- on détermine la répartition (V(HC)) du trafic dirigé sur la route multivoie vers le noeud en fonction de la plage de valeurs des codes de hachage (HC) sur la base du trafic dirigé depuis les noeuds précédents (A, B) vers le noeud concerné,
-- on définit une attribution de tronçons de plage de valeurs des codes de hachage (HC) à des liens sortant de la route multivoie en fonction de la répartition théorique du trafic.

**2.** Procédé selon la revendication 1,
**caractérisé en ce que**,

- pour un noeud de départ (A, B), les codes de hachage (HC) sont répartis de façon uniforme dans leur plage de valeurs.

**3.** Procédé selon la revendication 1 ou 2,
**caractérisé en ce que**

- les codes de hachage sont formés d'une adresse d'origine et d'une adresse cible.

**4.** Procédé selon l'une quelconque des revendications précédentes,
**caractérisé en ce que**

- exactement un tronçon de plage de valeurs est attribué à chaque lien sortant.

# FIG 1

# FIG 2

# FIG 3

# FIG 4

6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Z.CAO ; Z.WANG ; E. ZEGURA.** Proceedings der IEEE Conference on Computer Communications. *IEEE Infocom 2000,* Marz 2000